Europäisches Patentamt

European Patent Office

Office européen des brevets

(19)

(11) Numéro de publication : **0 432 013 B1**

(12) # FASCICULE DE BREVET EUROPEEN

(45) Date de publication du fascicule du brevet :
**30.12.92 Bulletin 92/53**

(51) Int. Cl.⁵ : **F16L 27/08**

(21) Numéro de dépôt : **90403367.7**

(22) Date de dépôt : **28.11.90**

(54) **Raccord de canalisation équipé d'un dispositif de drainage de fuites.**

(30) Priorité : **29.11.89 FR 8915695**

(43) Date de publication de la demande :
**12.06.91 Bulletin 91/24**

(45) Mention de la délivrance du brevet :
**30.12.92 Bulletin 92/53**

(84) Etats contractants désignés :
**DE FR GB**

(56) Documents cités :
**DE-A- 3 428 280**
**DE-B- 1 525 728**
**GB-A- 204 900**
**US-A- 3 244 440**
**US-A- 4 626 004**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Boileau, Patrick André**
**7 D, Square du Dauphiné**
**F-91330 Yerres (FR)**

(74) Mandataire : **Moinat, François et al**
**S.N.E.C.M.A. Service des Brevets Boîte Postale 81**
**F-91003 Evry Cédex (FR)**

EP 0 432 013 B1

## Description

La présente invention concerne un raccord de canalisation équipé d'un dispositif de drainage de fuites.

Dans les circuits de distribution de fluides, les canalisations successives sont reliées par des raccords qui comprennent en général une bague annulaire qui se visse sur l'une des canalisations et tire l'autre canalisation, au moyen d'une collerette, en contact serré et étanche contre la première canalisation.

Lorsque les canalisations véhiculent un fluide dangereux, par exemple un liquide inflammable, toute fuite de fluide hors du raccord peut avoir des conséquences très graves et on prévoit des moyens pour drainer le fluide qui fuit hors du raccord jusqu'à une zone dépourvue de risques.

Dans une application à la distribution de carburant vers des injecteurs de turbomachine, on connaît ainsi du document FR-A-2 510 714 un dispositif de drainage composé d'une enveloppe qui enferme la totalité du raccord et de joints d'étanchéité entre l'enveloppe et les deux canalisations, et l'enveloppe étant traversée par un passage de sortie auquel aboutit un conduit de drainage qui mène à une zone éloignée dépourvue de risques.

Grâce à cette enveloppe, toute fuite de liquide hors du raccord se trouve confinée dans l'enveloppe et ne peut s'écouler que par le passage de sortie et le conduit de drainage jusqu'à la zone éloignée.

Il s'agit là cependant d'un dispositif encombrant et complexe, dont le poids s'ajoute à celui du raccord, dont la mise en place nécessite un temps supplémentaire, et qu'il convient de démonter et de remonter chaque fois que l'on doit intervenir sur le raccord pour entretien ou réparation. Dans des cas extrêmes, il est également possible d'oublier de monter ou de remonter l'enveloppe de drainage de fuites.

On connaît également, du document US-A-4 185 462, un agencement dans lequel la bague annulaire de raccord constitue elle-même l'enveloppe de drainage, mais il convient dans ce cas de maintenir l'intérieur de l'enveloppe et le conduit de drainage sous dépression par rapport à la zone extérieure autour du raccord et de son enveloppe.

De plus, l'orientation angulaire du passage de sortie dépend du serrage de la bague de raccord, ce qui pose des problèmes, voire des impossibilités, pour le raccordement du conduit de drainage.

On connaît également du document GB-A-2 107 809 un raccord dans lequel l'une des canalisations se termine par un embout femelle à alésage à deux sections étagées et l'autre canalisation se termine par un embout mâle à deux portées étagées reçues dans les deux sections étagées de l'alésage avec interposition de joints entourant l'une et l'autre des portées de l'embout mâle. De la sorte, une chambre de fuites se trouve définie dans l'embout femelle entre les deux sections d'alésage, chambre raccordée à un conduit de drainage par un orifice de sortie.

Dans la mesure où l'étanchéité principale entre l'embout mâle et l'embout femelle est assurée uniquement par le joint entourant l'extrémité de l'embout mâle, un tel dispositif ne peut s'appliquer qu'à des canalisations qui véhiculent des liquides sous faible pression.

Ici également, l'orientation angulaire du passage de sortie ne peut pas être choisie librement puisqu'elle dépend du montage de la canalisation équipée de l'embout femelle.

Le but de la présente invention est donc de réaliser un raccord comprenant un dispositif de drainage de fuites, qui soit le plus simple et le plus sûr possible et remédie aux inconvénients des dispositifs antérieurs précités.

Ce but est atteint selon l'invention par un raccord de canalisation, comprenant un premier embout à fixer au bout d'une première canalisation, le premier embout comprenant un épaulement postérieur d'appui et une portée d'étanchéité à son extrémité, un second embout à fixer au bout d'une seconde canalisation, le second embout comprenant un filetage extérieur et une portée d'étanchéité à son extrémité, et une bague de raccord comprenant un filetage intérieur vissé sur le filetage extérieur du second embout et une collerette rentrante postérieure engageant l'épaulement d'appui du premier embout, la bague de serrage définissant une chambre de drainage de fuites et comportant un orifice de sortie, caractérisé en ce que ladite bague est réalisée en deux parties, assemblées l'une à l'autre avec faculté de libre rotation l'une par rapport à l'autre, une première partie portant ladite collerette rentrante postérieure et entourant le premier embout et au moins une partie du second embout avec interposition de joints d'étanchéité vis-à-vis de l'un etl'autre, et une seconde partie portant ledit filetage intérieur.

Ainsi, grâce à l'invention, la bague de raccord, bien que constituée de deux parties, forme un sous-ensemble unitaire dont la mise en place s'effectue en une seule opération. De plus, seule la seconde partie tourne lors du vissage sur le second embout de canalisation, de sorte que l'orifice de sortie de la première partie de bague peut être orienté angulairement dans toute position désirée pour son raccordement au conduit de drainage.

Enfin, les deux parties de bague sont de formes simples, faciles à fabriquer, et le poids de l'ensemble du raccord est notablement réduit.

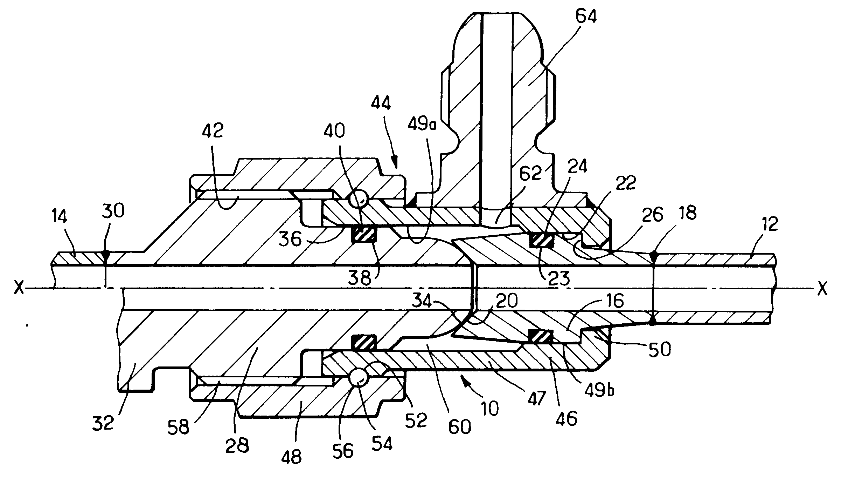

Les détails et avantages de l'invention apparaîtront clairement à la lecture de la description qui va suivre, en se référant à la figure unique du dessin annexé, qui est une vue en coupe longitudinale d'un raccord conforme à l'invention.

Le raccord désigné dans son ensemble par la référence 10 est destiné à raccorder ensemble deux canalisations 12, 14, ou analogues.

Le raccord comprend un premier embout 16, de forme générale tubulaire, à fixer au bout de la première canalisation 12 par exemple par une soudure 18, ou venu de matière avec cette canalisation. A son extrémité distale, l'embout 16 présente une portée d'étanchéité tronconique rentrante 20. A sa périphérie, il définit une portée cylindrique 22 munie d'une gorge 23 recevant un joint annulaire d'étanchéité 24 et se termine par un épaulement postérieur 26.

Le raccord comprend un second embout 28, également de forme générale tubulaire, disposé dans l'alignement du premier sur le même axe XX. Cet embout 28 est du type à fixer au bout de la seconde canalisation 14, par exemple par une soudure 30, ou bien venu de matière avec cette canalisation ou avec un organe 32 dans lequel la canalisation 14 est ménagée.

A son extrémité distale, l'embout 28 présente une portée d'étanchéité hémisphérique 34 en contact avec la portée tronconique 20 du premier embout.

A sa périphérie, il définit successivement, depuis son extrémité distale, une portée cylindrique 36 munie d'une gorge 38 recevant un joint annulaire d'étanchéité 40, puis une portée filetée 42.

Autour des deux embouts, le raccord comprend une bague de serrage 44, composée de deux parties 46, 48.

La première partie 46 a la forme d'un fourreau 47 tubulaire qui entoure les portées 22, 36 cylindriques des deux embouts et se termine par une collerette rentrante 50 en appui contre l'épaulement postérieur 26 du premier embout.

A sa périphérie externe, le fourreau 47 comporte une gorge 52 qui reçoit un jonc rigide 54.

La seconde partie 48 de bague a également la forme d'un fourreau tubulaire qui entoure en partie la première partie de bague 46 et le second embout 28.

A sa périphérie intérieure, la seconde partie de bague est munie successivement d'une gorge 56 qui reçoit le jonc rigide 54, et d'un filetage intérieur 58 vissé sur le filetage extérieur 42 du second embout 28.

A l'intérieur de la première partie de bague 46 et entre les deux joints 24 et 40 se trouve ainsi définie une chambre de collecte 60 pour le liquide susceptible de fuir hors du raccord entre les portées d'extrémité 20 et 34 des deux embouts. Le fourreau 47 de cette première partie de bague est percé d'un orifice de sortie 62 qui débouche dans la chambre 60 et se prolonge à l'extérieur sensiblement radialement par un embout de purge 64 destiné à recevoir un conduit de purge non représenté.

On notera que le mode d'assemblage choisi entre les deux parties 46 et 48 de bague permet de rendre ces deux parties solidaires en direction axiale, tout en permettant une libre rotation de l'une par rapport à l'autre autour de l'axe XX. On pourra donc remplacer dans le cadre de l'invention l'assemblage à jonc rigide coopérant avec deux gorges en vis-à-vis des deux parties de bague par tout assemblage équivalent, comme il conviendra à l'homme de métier.

L'assemblage du raccord s'effectue de la manière suivante:

- on engage à l'extrémité de la première canalisation 12 la bague de serrage 44 et on la repousse, vers la droite à la figure, jusqu'à dégager l'extrémité de la canalisation 12;

- on fixe le premier embout 16 au bout de la canalisation 12;

- on fixe, ou on forme, le second embout 28 au bout de la seconde canalisation 14 ou de l'organe 32;

- on aligne les deux embouts en contact par leurs portées d'extrémité 20, 34;

- on fait coulisser la bague de serrage 44 vers la gauche jusqu'à ce que le filetage intérieur 58 de la seconde partie de bague atteigne le filetage extérieur 42 du second embout 28;

- on visse la seconde partie 48 de bague sur le second embout, ce qui déplace l'ensemble de la bague 44 vers la gauche à la figure et amène le fourreau 47 à entourer les deux portées cylindriques 22, 36 des deux embouts et faire un contact étanche avec les deux joints 24, 40;

- pendant ce vissage, on oriente l'embout de purge 64 dans une direction souhaitée et on le maintient dans cette direction;

- on arrête le vissage lorsque la collerette 50 a rejoint l'épaulement 26 du premier embout et exerce sur le premier embout un effort de serrage suffisant pour assurer une bonne étanchéité entre les deux portées d'extrémité conique et sphérique 20, 34. Le raccord de purge 64 conserve son orientation pendant le serrage. L'assemblage est terminé et on remarque qu'il n'a pas nécessité plus d'opérations que l'assemblage d'un raccord classique dépourvu de dispositif de collecte de fuites.

Le démontage s'effectue par les opérations inverses qui apparaîtront clairement à l'homme de métier et ne seront donc pas décrites.

On accède alors rapidement et simplement aux embouts, ce qui permet de vérifier leur état et de les remplacer si nécessaire, de même que les joints.

Enfin, il n'est pas besoin de maintenir dans la chambre et le conduit de purge une quelconque dépression puisque la chambre forme un volume totalement clos dont le liquide ne peut s'échapper que par l'orifice 62 et le conduit de purge.

Les pièces qui composent le raccord sont de formes simples facilement réalisables avec des machines habituelles, sans qu'il soit nécessaire de prévoir des tolérances serrées.

Pour favoriser un bon engagement du fourreau 47 autour des embouts, on prévoira que la portée cylindrique 36 du second embout 48 ait un diamètre légèrement supérieur au diamètre de la portée cylindrique 22 du premier embout, et l'alésage intérieur 49 du fourreau sera formé de deux parties de diamètres adaptés 49a, 49b.

## Revendications

1. Raccord (10) de canalisation (12, 14), comprenant un premier embout (16) à fixer au bout d'une première canalisation (12), le premier embout (16) comprenant un épaulement postérieur (26) d'appui et une portée d'étanchéité (20) à son extrémité, un second embout (28) à fixer au bout d'une seconde canalisation (14), le second embout (28) comprenant un filetage extérieur (42) et une portée d'étanchéité (34) à son extrémité, et une bague (44) de raccord comprenant un filetage intérieur (58) vissé sur le filetage extérieur (42) du second embout (28) et une collerette rentrante (50) postérieure engageant l'épaulement (26) d'appui du premier embout (16), la bague de serrage (44) définissant une chambre (60) de drainage de fuites et comportant un orifice de sortie (62), caractérisé en ce que ladite bague (44) est réalisée en deux parties (46, 48), assemblées l'une à l'autre avec faculté de libre rotation l'une par rapport à l'autre, une première partie (46) portant ladite collerette rentrante (50) postérieure et entourant le premier embout (16) et au moins une partie (36) du second embout (28) avec interposition de joints d'étanchéité (24, 40) vis-à-vis de l'un et l'autre, et une seconde partie (48) portant ledit filetage intérieur (58).

## Patentansprüche

1. Rohrverbindungsstück (10) mit einem an dem Endstück eines ersten Rohrs (12) zu befestigenden ersten Anschlußteil (16), das eine hintere Stützschulter (26) und an seinem Ende eine Dichtungsauflagefläche (20) aufweist, ferner mit einem an dem Endstück eines zweiten Rohrs (14) zu befestigenden zweiten Anschlußteil (28), das ein Außengewinde (42) und an seinem Ende eine Dichtungsauflagefläche (34) aufweist, sowie mit einem Verbindungsspannring (44) mit einem in das Außengewinde (42) des zweiten Anschlußteils (28) eingeschraubten Innengewinde (58) und einem hinteren rückspringenden Kragen (20), der mit der Stützschulter (26) des ersten Anschlußteils (16) in Eingriff steht, wobei der Spannring (44) eine Kammer (60) mit einer Ausgangsöffnung (62) zur Ableitung von Lecken begrenzt, **dadurch gekennzeichnet**, daß der genannte Ring (44) aus zwei Teilen (46, 48) besteht, die so miteinander verbunden sind, daß sie gegeneinander frei drehbar sind, wobei ein erster Teil (46) den genanten rückspringenden hinteren Kragen (50) trägt und das erste Anschlußteil (16) und zumindest einen Teil (36) des zweiten Anschlußteils (28) jeweils unter Zwischenfügung von Dichtungen (24, 40) umschließt, und wobei ein zweiter Teil (48) das genannte Innengewinde (58) trägt.

## Claims

1. Union (10) for pipes (12, 14), comprising a first end piece (16) to be fitted to the end of a first pipe (12), the first end piece (16) comprising a rear thrust shoulder (26) and a sealing extension (20) at its extremity, a second end piece (28) to be fitted to the end of a second pipe (14), the second end piece (28) comprising an outer thread (42) and a sealing extension (34) at its extremity, and a clamping ring (44) comprising an inner thread (58) screwed on to the outer thread (42) of the second end piece (28) and a rear re-entrant collar (50) engaging with the thrust shoulder (26) of the first end piece (16), the clamping ring (44) defining a chamber (60) for draining leakages and comprising an outlet hole (62), characterised in that the said ring (44) is made in two parts (46, 48) assembled together with the ability to rotate freely in relation to each other, a first part (46) carrying the said rear re-entrant collar (50) surrounding the first end piece (16) and at least a part (36) of the second end piece (28) with the interposition of annular seals (24, 40) facing each other, and a second part (48) carrying the said inner threaded section (58).